(19) Europäisches Patentamt European Patent Office Office européen des brevets

(11) EP 2 636 688 B1

(12) EUROPEAN PATENT SPECIFICATION

(45) Date of publication and mention
of the grant of the patent:
**16.11.2016 Bulletin 2016/46**

(51) Int Cl.:
***C08F 4/654*** *(2006.01)*     ***C08F 4/658*** *(2006.01)*
***C08F 10/00*** *(2006.01)*

(21) Application number: **11838011.2**

(22) Date of filing: **01.11.2011**

(86) International application number:
**PCT/JP2011/075153**

(87) International publication number:
**WO 2012/060361 (10.05.2012 Gazette 2012/19)**

(54) **METHOD FOR PRODUCING SOLID CATALYST COMPONENT FOR OLEFIN POLYMERIZATION, CATALYST FOR OLEFIN POLYMERIZATION, AND OLEFIN POLYMERS**

VERFAHREN ZUR HERSTELLUNG EINER FESTSTOFFKATALYSATORKOMPONENTE ZUR OLEFINPOLYMERISATION, KATALYSATOR ZUR OLEFINPOLYMERISATION UND OLEFINPOLYMERE

PROCÉDÉ DE PRODUCTION D'UN COMPOSANT DE CATALYSEUR SOLIDE POUR LA POLYMÉRISATION D'OLÉFINES, CATALYSEUR POUR LA POLYMÉRISATION D'OLÉFINES, ET POLYMÈRES D'OLÉFINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2010 JP 2010247457**

(43) Date of publication of application:
**11.09.2013 Bulletin 2013/37**

(73) Proprietor: **Toho Titanium Co., Ltd.**
**Chigasaki-shi**
**Kanagawa 253-8510 (JP)**

(72) Inventor: **HOSAKA Motoki**
**Chigasaki-shi**
**Kanagawa 253-8510 (JP)**

(74) Representative: **Müller-Boré & Partner**
**Patentanwälte PartG mbB**
**Friedenheimer Brücke 21**
**80639 München (DE)**

(56) References cited:
**EP-A1- 1 533 322          WO-A1-2008/120795**
**WO-A1-2010/106888    JP-A- 8 157 521**
**JP-A- 11 060 625          JP-A- 2009 173 870**
**JP-A- 2010 242 062**

• **TANASE ET AL: "Design of novel malonates as internal donors for MgCl2-supported TiCl4 type polypropylene catalysts and their mechanistic aspects, Part 1", JOURNAL OF MOLECULAR CATALYSIS A: CHEMICAL, ELSEVIER, AMSTERDAM, NL, vol. 273, no. 1-2, 29 June 2007 (2007-06-29), pages 211-217, XP022135171, ISSN: 1381-1169, DOI: 10.1016/J.MOLCATA.2007.04.002**

**Description**

The invention relates to an olefin polymerization catalyst, and a method for producing an olefin polymer.

A solid catalyst component that contains magnesium, titanium, an electron donor, and a halogen as essential components has been used when polymerizing an olefin (e.g., propylene). Various methods have been proposed that polymerize or copolymerize an olefin in the presence of an olefin polymerization catalyst that contains the solid catalyst component, an organoaluminum compound, and an organosilicon compound.

For example, Patent Document 1 (JP-A-63-3010) discloses producing a solid catalyst component by heating a powdery product obtained by bringing a dialkoxymagnesium, an aromatic dicarboxylic diester, an aromatic hydrocarbon compound, and a titanium halide into contact with each other, and polymerizing propylene in the presence of a propylene polymerization catalyst that contains the solid catalyst component, an organoaluminum compound, and an organosilicon compound.

A compound that mainly contains a benzene ring has been used as the electron donor used for polymerization. In recent years, development of an electron donor that does not contain a benzene ring has been desired taking account of environmental issues.

Patent Document 2 (JP-A-2004-91513) discloses a solid catalyst component for olefin polymerization that is produced by bringing a dialkoxymagnesium, a tetravalent titanium halogen compound, and a substituted malonic diester compound (electron donor) into contact with each other in an aromatic hydrocarbon compound having a boiling point of 50 to 150°C. Patent Document 3 (WO2008/120795) discloses a solid catalyst component for olefin polymerization that is produced using a magnesium compound, a tetravalent titanium halide compound, and a substituted malonic diester that includes two different ester residues (electron donor). Further, JP-A-2010-242062 discloses an olefin polymerization catalyst formed from a solid catalyst component (A) for olefin polymerization obtained by contacting a solid component (a) containing a magnesium compound, $TiCl_4$ and an electron donor, and an aminosilane compound (b) expressed by $R^1_nSi(NR^2R^3)_{4-n}$, and an organoaluminum compound (B) and, if necessary an external electron donor (C).

A polymer obtained using such a polymerization catalyst has been used for various applications such as automotive parts, home appliance parts, containers, and films, and these products are produced by melting a polymer powder produced by polymerization, and molding the molten polymer using a molding system. When producing a large molded product by injection molding, the molten polymer may be required to have a high melt flow rate (MFR). Therefore, extensive studies have been conducted in order to improve the MFR of a polymer.

The MFR of a polymer varies significantly depending on the molecular weight of the polymer. It has been a common practice in the art to add hydrogen as a molecular weight modifier when polymerizing propylene. It is normally necessary to add a large amount of hydrogen in order to produce a polymer having a low molecular weight (i.e., a polymer having a high MFR).

However, the withstanding pressure of a polymerization reactor is limited from the viewpoint of safety, and only a limited amount of hydrogen can be added. Therefore, the partial pressure of a monomer subjected to polymerization must be reduced in order to add a large amount of hydrogen. In this case, a decrease in productivity occurs. An increase in cost also occurs as a result of using a large amount of hydrogen. Moreover, a polymer produced while adding a large amount of hydrogen shows a significant deterioration in stereoregularity along with an increase in MFR, and an increase in tackiness, and a decrease in heat resistance due to a decrease in melting point of the polymer may occur. These problems adversely affect the final product.

Patent Document 1: JP-A-63-3010 (claims)
Patent Document 2: JP-A-2004-91513 (claims)
Patent Document 3: WO2008/120795 (claims)

In view of the above situation, an object of the invention is to provide an environmentally-friendly olefin polymerization catalyst that exhibit high hydrogen activity and high polymerization activity, can produce a polymer that exhibits a high MFR and high stereoregularity in high yield using a small amount of hydrogen, and exhibit high copolymerization activity and excellent copolymerization properties (e.g., block ratio). Another object of the invention is to provide a method for producing an olefin polymer that utilizes the olefin polymerization catalyst.

The inventor of the invention conducted extensive studies in order to solve the above technical problem, and found that the above technical problem can be solved by a solid catalyst component that is produced using a specific substituted dimethyl malonate as an internal electron donor instead of an aromatic dimethyl carboxylate (e.g., dimethyl phthalate) that has been known to significantly decrease the catalytic performance when used as the internal electron donor. This finding has led to the completion of the invention.

Several aspects of the invention provide the following.

(1) An olefin polymerization catalyst produced by bringing ($\alpha$) a solid catalyst component for olefin polymerization, ($\beta$) an organoaluminum compound represented by a general formula (II), and ($\gamma$) an external electron donor into contact with each other,

$$R^2{}_pAlQ_{3-p} \qquad (II)$$

wherein $R^2$ is an alkyl group having 1 to 4 carbon atoms, Q is a hydrogen atom or a halogen atom, and p is a real number that is larger than 0 and equal to or less than 3, provided that a plurality of $R^2$ may be either identical or different when a plurality of $R^2$ are present, and a plurality of Q may be either identical or different when a plurality of Q are present,
the solid catalyst component ($\alpha$) being produced by bringing (a) a magnesium compound, (b) an internal electron donor represented by a general formula (I), and (c) a tetravalent-element halogen compound into contact with each other in an inert organic solvent,

$$R^1{}_2C(COOCH_3)_2 \qquad (I)$$

wherein $R^1$ is selected from an isobutyl group, and
the external electron donor ($\gamma$) being one or more compounds selected from diisopropyldimethoxysilane and dicyclopentyldimethoxysilane.
(2) The olefin polymerization catalyst according to (1), wherein the magnesium compound (a) is a dialkoxymagnesium.
(3) The olefin polymerization catalyst according to (1) or (2), wherein the tetravalent-element halogen compound (c) is titanium tetrachloride.
(4) A method for producing an olefin polymer comprising polymerizing an olefin in the presence of the olefin polymerization catalyst according to any one of (1) to (3).
(5) The method for producing an olefin polymer according to (4), wherein the olefin polymer is a copolymer of propylene and an olefin other than propylene.
(6) The method for producing an olefin polymer according to (5), wherein the olefin is propylene and ethylene, and subjected to random copolymerization in a single stage or subjected to block copolymerization wherein propylene is polymerized in a first stage in the presence of the olefin polymerization catalyst according to any one of (1) to (3), and the resulting polypropylen and ethylene are polymerized in the second stage.

Note that the internal electron donor represented by the general formula (I) may be hereinafter referred to as "internal electron donor (b)", the solid catalyst component for olefin polymerization may be hereinafter referred to as "solid catalyst component for olefin polymerization ($\alpha$)" or "solid catalyst component ($\alpha$)", and the organoaluminum compound represented by the general formula (II) may be hereinafter referred to as "organoaluminum compound ($\beta$)".
The aspects of the invention thus provide an environmentally-friendly olefin polymerization catalyst that exhibit high hydrogen activity and high polymerization activity, and can produce a polymer that exhibits a high MFR and high stereoregularity in high yield using a small amount of hydrogen, and also provide a method for producing an olefin polymer that utilizes the olefin polymerization catalyst.
A solid catalyst component for olefin polymerization (hereinafter may be referred to as "solid catalyst component") used to produce the olefin polymerization catalyst according to one embodiment of the invention is described below.
The solid catalyst component is produced by bringing (a) a magnesium compound, (b) an internal electron donor represented by the following general formula (I), and (c) a tetravalent-element halogen compound into contact with each other in an inert organic solvent.

$$R^1{}_2C(COOCH_3)_2 \qquad (I)$$

wherein $R^1$ is selected from an isobutyl group.
Examples of the magnesium compound (a) used to produce the solid catalyst component include one or more magnesium compounds selected from a magnesium dihalide, a dialkylmagnesium, an alkylmagnesium halide, a dialkoxymagnesium, a diaryloxymagnesium, an alkoxymagnesium halide, and a fatty acid magnesium salt. Among these, a magnesium dihalide, a mixture of a magnesium dihalide and a dialkoxymagnesium, and a dialkoxymagnesium are preferable, and a dialkoxymagnesium is particularly preferable.
Examples of the dialkoxymagnesium include dimethoxymagnesium, diethoxymagnesium, dipropoxymagnesium, dibutoxymagnesium, ethoxymethoxymagnesium, ethoxypropoxymagnesium, and butoxyethoxymagnesium. These dialkoxymagnesiums may be prepared by reacting magnesium metal with an alcohol in the presence of a halogen, or a halogen-containing metal compound. The dialkoxymagnesiums may be used either alone or in combination.

It is preferable to use a granular or powdery dialkoxymagnesium when producing the solid catalyst component. The dialkoxymagnesium may have an indefinite shape or a spherical shape. For example, when using a spherical dialkoxymagnesium, a polymer powder obtained by polymerization has a better particle shape and a narrow particle size distribution. This improves the handling capability of the polymer powder during polymerization, and eliminates problems such as clogging caused by fine particles contained in the polymer powder.

The spherical dialkoxymagnesium need not necessarily have a perfect spherical shape, but may have an elliptical shape or a potato-like shape. The ratio (1/w) of the major axis diameter (1) to the minor axis diameter (w) of the spherical dialkoxymagnesium is 3 or less, preferably 1 to 2, and more preferably 1 to 1.5.

The average particle size D50 (i.e., the particle size at 50% in the cumulative volume particle size distribution) of the dialkoxymagnesium measured using a laser diffraction/scattering particle size distribution analyzer is preferably 1 to 200 $\mu$m, and more preferably 5 to 150 $\mu$m. The average particle size of the spherical dialkoxymagnesium is preferably 1 to 100 $\mu$m, more preferably 5 to 50 $\mu$m, and still more preferably 10 to 40 $\mu$m. It is preferable that the spherical dialkoxymagnesium have a narrow particle size distribution, and have a low fine particle content and a low coarse particle content. More specifically, it is preferable that the content of particles having a particle size (measured using a laser diffraction/scattering particle size distribution analyzer) of 5 $\mu$m or less in the spherical dialkoxymagnesium be 20% or less, and more preferably 10% or less. It is preferable that the content of particles having a particle size of 100 $\mu$m or more in the spherical dialkoxymagnesium be 10% or less, and more preferably 5% or less.

The particle size distribution ln(D90/D10) (where, D90 is the particle size at 90% in the cumulative volume particle size distribution, and D10 is the particle size at 10% in the cumulative volume particle size distribution) of the spherical dialkoxymagnesium is preferably 3 or less, and more preferably 2 or less.

The spherical dialkoxymagnesium may be produced using the method disclosed in JP-A-58-41832, JP-A-62-51633, JP-A-3-74341, JP-A-4-368391, or JP-A-8-73388.

The solid catalyst component is produced using the internal electron donor (b) represented by the following general formula (I).

$$R1^2{}_C(COOCH_3)_2 \qquad (I)$$

wherein R[1] is selected from an isobutyl group.

R[1] in the substituted dimethyl malonate (internal electron donor) represented by the general formula (I) is selected from an isobutyl group(dimethyl diisobutylmalonate), since it is possible to obtain an olefin polymer that exhibits high stereoregularity during polymerization, and has an excellent melt flow rate (MFR).

The solid catalyst component may be produced using an additional internal electron donor in combination with the internal electron donor represented by the general formula (I).

The additional internal electron donor that may be used in combination with the internal electron donor represented by the general formula (I) is an organic compound that includes an oxygen atom or a nitrogen atom. Examples of the additional internal electron donor include alcohols, phenols, ethers, esters, ketones, acid halides, aldehydes, amines, amides, nitriles, and isocyanates.

Specific examples of the additional internal electron donor include one or more compounds selected from alcohols such as methanol, ethanol, propanol, and 2-ethylhexanol, phenols such as phenol and cresol, ethers such as methyl ether, ethyl ether, propyl ether, butyl ether, amyl ether, diphenyl ether, 9,9-bis(methoxymethyl)fluorene, 2-isopropyl-2-isopentyl-1,3-dimethoxypropane, 2,2-diisobutyl-1,3-dimethoxypropane, 2,2-dicyclohexyl-1,3-dimethoxypropane, 2,2-bis(cyclohexylmethyl)-1,3-dimethoxypropane, 2-cyclohexyl-2-isopropyl-1,3-dimethoxypropane, 2-isopropyl-2-sec-butyl-1,3-dimethoxypropane, 2,2-diphenyl-1,3-dimethoxypropane, and 2-cyclopentyl-2-isopropyl-1,3-dimethoxypropane, monocarboxylates such as methyl formate, ethyl acetate, vinyl acetate, propyl acetate, octyl acetate, cyclohexyl acetate, ethyl propionate, ethyl butyrate, ethyl benzoate, propyl benzoate, butyl benzoate, octyl benzoate, cyclohexyl benzoate, phenyl benzoate, methyl p-toluate, ethyl p-toluate, methyl anisate, and ethyl anisate, succinic diesters such as diethyl 2,3-diethylsuccinate, diethyl 2,3-dipropylsuccinate, diethyl 2,3-diisopropylsuccinate, diethyl 2,3-dibutylsuccinate, diethyl 2,3-diisobutylsuccinate, diethyl 2,3-di-t-butylsuccinate, dibutyl 2,3-diethylsuccinate, dibutyl 2,3-dipropylsuccinate, dibutyl 2,3-diisopropylsuccinate, dibutyl 2,3-dibutylsuccinate, dibutyl 2,3-diisobutylsuccinate, and dibutyl 2,3-di-t-butylsuccinate, glutaric diesters such as diisobutyl 3-methylglutarate, diisobutyl 3-phenyglutarate, diethyl 3-ethylglutarate, diethyl 3-n-propylglutarate, diethyl 3-isopropylglutarate, diethyl 3-isobutylglutarate, diethyl 3-phenylglutarate, diisobutyl 3-ethylglutarate, diisobutyl 3-isopropylglutarate, diisobutyl 3-isobutylglutarate, diethyl 3-(3,3,3-trifluoropropyl)glutarate, diethyl 3-cyclohexylmethylglutarate, diethyl 3-t-butylglutarate, diethyl 3,3-dimethylglutarate, diisobutyl 3,3-dimethylglutarate, diethyl 3-methyl-3-isobutylglutarate, and diethyl 3-methyl-3-t-butylglutarate, cyclohexenecarboxylic diesters such as diethyl 1-cyclohexene-1,2-dicarboxylate, di-n-propyl 1-cyclohexene-1,2-dicarboxylate, di-n-butyl 1-cyclohexene-1,2-dicarboxylate, dibutyl 1-cyclohexene-1,2-dicarboxylate, dineopentyl 1-cyclohexene-1,2-dicarboxylate, bis(2,2-dimethylhexyl) 1-cyclohexene-1,2-dicarboxylate, and diethyl 4-cyclohexene-1,2-dicarboxylate, cyclohexanecarboxylic diesters such as diethyl cyclohexane-1,2-dicarboxylate, di-n-propyl cyclohexane-1,2-dicarboxylate, di-n-butyl cyclohexane-1,2-dicarboxylate, diisobutyl cyclohexane-1,2-dicarboxylate, dineopentyl cyclohexane-1,2-dicarboxylate, bis(2,2-dimethylhexyl) cyclohexane-1,2-dicarboxylate, diethyl 3-methylcyclohexane-1,2-dicarboxylate, diethyl 4-methylcyclohexane-1,2-dicarboxylate, diethyl cyclohexane-1,1-dicarboxylate, di-n-propyl cyclohexane-1,1-dicarboxylate, di-n-butyl cyclohexane-1,1-dicarboxylate, diisobutyl cyclohexane-1,1-dicarboxylate, dineopentyl cyclohexane-1,1-dicarboxylate, bis(2,2-dimethylhexyl) cyclohexane-1,1-dicarboxylate, diethyl 3-methylcyclohexane-1,1-dicarboxylate, and diethyl 4-methylcyclohexane-1,1-dicarboxylate, maleic diesters such as dimethyl maleate, diethyl maleate, dipropyl maleate, and dibutyl maleate, adipic diesters such as dimethyl adipate, diethyl adipate, dipropyl adipate, diisopropyl adipate, dibutyl adipate, diisodecyl adipate, and dioctyl adipate, phthalic diesters such as dimethyl phthalate, diethyl phthalate, dipropyl phthalate, diisopropyl phthalate, dibutyl phthalate, diisobutyl phthalate, methylethyl phthalate, methylisopropyl phthalate, ethylpropyl phthalate, ethylbutyl phthalate, ethylisobutyl phthalate, dipentyl phthalate, diisopentyl phthalate, dineopentyl phthalate, dihexyl phthalate, diheptyl phthalate, dioctyl phthalate, bis(2,2-dimethylhexyl) phthalate, bis(2-ethylhexyl) phthalate, dinonyl phthalate, diisodecyl phthalate, bis(2,2-dimethylheptyl) phthalate, butylisohexyl phthalate, butyl(2-ethylhexyl) phthalate, pentylhexyl phthalate, pentylisohexyl phthalate, isopentylheptyl phthalate, pentyl(2-ethylhexyl) phthalate, pentylisononyl phthalate, isopentyldecyl phthalate, pentylundecyl phthalate, isopentylisohexyl phthalate, hexyl(2,2-dimethylhexyl) phthalate, hexylisononyl phthalate, hexyldecyl phthalate, heptyl(2-ethylhexyl) phthalate, heptylisononyl phthalate, heptyldecyl phthalate, (2-ethylhexyl)isononyl phthalate, dineopentyl 4-methylphthalate, dineopentyl 4-ethylphthalate, dineopentyl 4,5-dimethylphthalate, dineopentyl 4,5-diethylphthalate, diethyl 4-chlorophthalate, dibutyl 4-chlorophthalate, dineopentyl 4-chlorophthalate, diisobutyl 4-chlorophthalate, diisohexyl 4-chlorophthalate, diisooctyl 4-chlorophthalate, diethyl 4-bromophthalate, dibutyl 4-bromophthalate, dineopentyl 4-bromophthalate, diisobutyl 4-bromophthalate, diisohexyl 4-bromophthalate, diisooctyl 4-bromophthalate, diethyl 4,5-dichlorophthalate, dibutyl 4,5-dichlorophthalate, diisohexyl 4,5-dichlorophthalate, and diisooctyl 4,5-dichlorophthalate, ketones such as acetone, methyl ethyl ketone, propylacetone, acetophenone, and benzophenone, acid chlorides such as phthalic dichloride and terephthalic dichloride, aldehydes such as acetaldehyde, propionaldehyde, octyl aldehyde, and benzaldehyde, amines such as methylamine, ethylamine, tributylamine, piperidine, aniline, and pyridine, 2,6-substituted piperidines such as 2,2,6,6-tetramethylpiperidine, 2,5-substituted piperidines, substituted methylenediamines such as N,N,N',N'-tetramethylmethylenediamine, amides such as olefinic acid amide and stearic acid amide, nitriles such as acetonitrile, benzonitrile, and tolunitrile, and isocyanates such as methyl isocyanate and ethyl isocyanate.

The additional internal electron donor is preferably one or more compounds selected from phthalic diesters such as diethyl phthalate, dipropyl phthalate, diisopropyl phthalate, dibutyl phthalate, and diisobutyl phthalate, maleic diesters such as diethyl maleate and dibutyl maleate, and succinic diesters such as diethyl 2,3-diethylsuccinate and diethyl 2,3-dipropylsuccinate.

Examples of the tetravalent-element halogen compound (c) used to produce the solid catalyst component include one or more compounds selected from silicon halides, alkoxy group-containing silicon halides, titanium halides, and alkoxy group-containing titanium halides.

Specific examples of the tetravalent-element halogen compound (c) used to produce the solid catalyst component include silane tetrahalides such as tetrachlorosilane (silicon tetrachloride) and tetrabromosilane, alkoxy group-containing silane halides such as methoxytrichlorosilane, ethoxytrichlorosilane, propoxytrichlorosilane, n-butoxytrichlorosilane, dimethoxydichlorosilane, diethoxydichlorosilane, dipropoxydichlorosilane, di-n-butoxydichlorosilane, trimethoxychlorosilane, triethoxychlorosilane, tripropoxychlorosilane, and tri-n-butoxychlorosilane, titanium tetrahalides such as titanium tetrachloride, titanium tetrabromide, and titanium tetraiodide, and alkoxy group-containing titanium halides such as methoxytitanium trichloride, ethoxytitanium trichloride, propoxytitanium trichloride, n-butoxytitanium trichloride, dimethoxytitanium dichloride, diethoxytitanium dichloride, dipropoxytitanium dichloride, di-n-butoxytitanium dichloride, trimethoxytitanium chloride, triethoxytitanium chloride, tripropoxytitanium chloride, and tri-n-butoxytitanium chloride.

Among these, titanium tetrahalides and silane tetrahalides are preferable, and titanium tetrachloride and tetrachlorosilane are particularly preferable.

The solid catalyst component may be produced using one type of the tetravalent-element halogen compound (c), or may be produced using two or more types of the tetravalent-element halogen compound (c).

The solid catalyst component may preferably be produced by bringing the magnesium compound (a), the internal electron donor (b), the tetravalent-element halogen compound (c), and (d) a titanium halogen compound into contact with each other.

Examples of the titanium halogen compound (d) include one or more compounds selected from titanium halides and alkoxy group-containing titanium halides.

Specific examples of the titanium halogen compound (d) include titanium trihalides such as titanium trichloride, titanium tribromide, and titanium triiodide, titanium tetrahalides such as titanium tetrachloride, titanium tetrabromide, and titanium tetraiodide, and alkoxy group-containing titanium halides such as methoxytitanium trichloride, ethoxytitanium trichloride, propoxytitanium trichloride, n-butoxytitanium trichloride, dimethoxytitanium dichloride, diethoxytitanium dichloride, dipropoxytitanium dichloride, di-n-butoxytitanium dichloride, trimethoxytitanium chloride, triethoxytitanium chloride, tripropoxytitanium chloride, and tri-n-butoxytitanium chloride.

Among these, titanium trihalides and titanium tetrahalides are preferable, and titanium trichloride and titanium tetrachloride are particularly preferable. These titanium halogen compounds (d) may be used either alone or in combination.

The solid catalyst component may preferably be produced by bringing the magnesium compound (a), the internal electron donor (b), the tetravalent-element halogen compound (c), and a polysiloxane into contact with each other.

The polysiloxane is a polymer that includes a siloxane bond (-Si-O bond) in the main chain, and may be referred to as "silicone oil". The polysiloxane may be a chain-like, partially hydrogenated, cyclic, or modified polysiloxane that is liquid or viscous at room temperature, and has a viscosity at 25°C of 0.02 to 100 cm$^2$/s (2 to 10,000 cSt).

Examples of the chain-like polysiloxane include dimethylpolysiloxane and methylphenylpolysiloxane. Examples of the partially hydrogenated polysiloxane include methyl hydrogen polysiloxane having a degree of hydrogenation of 10 to 80%. Examples of the cyclic polysiloxane include hexamethylcyclotrisiloxane, octamethylcyclotetrasiloxane, decamethylcyclopentasiloxane,

2,4,6-trimethylcyclotrisiloxane, and 2,4,6,8-tetramethylcyclotetrasiloxane. Examples of the modified polysiloxane include a higher fatty acid group-substituted dimethylsiloxane, an epoxy group-substituted dimethylsiloxane, and a polyoxyalkylene group-substituted dimethylsiloxane.

Among these, decamethylcyclopentasiloxane and dimethylpolysiloxane are preferable, and decamethylcyclopentasiloxane is particularly preferable.

When the solid catalyst component is produced using the polysiloxane, the stereoregularity or the crystallinity of the resulting olefin polymer can be improved. Moreover, the fine particle content in the resulting polymer can be reduced, and the particle size distribution can be improved.

The solid catalyst component is produced by bringing the magnesium compound (a), the internal electron donor (b), and the tetravalent-element halogen compound (c) into contact with each other in the inert organic solvent.

Specific examples of a preferable inert organic solvent that may be used to produce the solid catalyst component include linear or branched aliphatic hydrocarbon compounds having 6 to 12 carbon atoms, such as hexane, heptane, octane, decane, isooctane, and 2-ethyloctane, alicyclic hydrocarbon compounds having 5 to 12 carbon atoms, such as cyclohexane and methylcyclohexane, and aromatic hydrocarbon compounds having 5 to 12 carbon atoms, such as toluene, xylene, and ethylbenzene. Among these, hexane, heptane, methylcyclohexane, toluene, and xylene are particularly preferable.

The solid catalyst component may be produced using one type of inert organic solvent, or may be produced using two or more types of inert organic solvent.

It is preferable that the inert organic solvent be liquid at -20°C and have a boiling point of 50 to 200°C. When the inert organic solvent is liquid at -20°C, a low-temperature aging step (described later) can be advantageously performed when producing the solid catalyst component for olefin polymerization. When the inert organic solvent has a boiling point of 50 to 200°C, the solubility of impurities can be improved.

When producing the solid catalyst component, the magnesium compound (a), the internal electron donor (b), and the tetravalent-element halogen compound (c) are brought into contact with each other using the method described in detail below.

Since the solid catalyst component is produced by bringing the magnesium compound (a), the internal electron donor (b), and the tetravalent-element halogen compound (c) into contact with each other in the inert organic solvent (particularly the inert organic solvent that is liquid at -20°C and has a boiling point of 50 to 200°C), the catalytic activity of the resulting solid catalyst component, and the stereoregularity of a polymer produced using the solid catalyst component are improved due to an increase in solubility of impurities.

The magnesium content in the solid catalyst component is preferably 10 to 70 mass%, more preferably 10 to 50 mass%, still more preferably 15 to 40 mass%, and particularly preferably 15 to 25 mass%. The total internal electron donor content in the solid catalyst component is preferably 0.5 to 30 mass%, more preferably 1 to 25 mass%, and particularly preferably 2 to 20 mass%. The halogen atom content in the solid catalyst component is preferably 20 to 90 mass%, more preferably 30 to 85 mass%, and particularly preferably 45 to 75 mass%. The titanium content in the solid catalyst component is preferably 0 to 8.0 mass%, more preferably 0.5 to 8.0 mass%, still more preferably 1.0 to 8.0 mass%, and particularly preferably 1.5 to 6.0 mass%.

The solid catalyst component exhibits its performance in a well-balanced manner when the magnesium content is 15 to 25 mass%, the internal electron donor content is 2 to 20 mass%, the halogen atom content is 45 to 75 mass%, and the titanium content is 2 to 8 mass%, for example.

The embodiments of the invention can thus provide an environmentally-friendly solid catalyst component used to produce an olefin polymerization catalyst that exhibits high hydrogen activity and high polymerization activity, and can produce a polymer that exhibits a high MFR, and high stereoregularity in high yield using a small amount of hydrogen.

A method for producing the solid catalyst component is described below.

The solid catalyst component may be produced by bringing the magnesium compound (a), the internal electron donor (b), and the tetravalent-element halogen compound (c) into contact with each other in the inert organic solvent in a suspended state.

The solid catalyst component may also be produced by suspending the magnesium compound (a) in the inert organic solvent, adding the internal electron donor (b) and the tetravalent-element halogen compound (c) to the suspension (i.e., bringing the internal electron donor (b) and the tetravalent-element halogen compound (c) into contact with the magnesium compound (a)) to obtain a solid, and adding the titanium halogen compound (d) to the solid (i.e., bringing the titanium halogen compound (d) into contact with the solid).

Examples of the titanium halogen compound (d) include those mentioned above.

The titanium halogen compound (d) is preferably a titanium trihalide or a titanium tetrahalide, and particularly preferably titanium trichloride or titanium tetrachloride. These titanium halogen compounds may be used either alone or in combination.

When using a spherical magnesium compound as the magnesium compound (a), a spherical solid catalyst component having a sharp particle size distribution can be obtained. A spherical solid catalyst component having a sharp particle size distribution can also be obtained without using a spherical magnesium compound by forming particles using a spray-drying method that sprays and dries a solution or a suspension using a sprayer, for example.

It is preferable to bring the components into contact with each other with stirring in a vessel that is equipped with a stirrer and contains an inert gas atmosphere from which water has been removed.

When the components are brought into contact with each other, and stirred (mixed), or dispersed or suspended to effect a modification treatment, the components may be brought into contact with each other at room temperature. Note that it is preferable to bring the components into contact with each other at a relatively low temperature (e.g., -20 to 30°C). When it is desired to react the components at a high temperature in a contact state to obtain a solid product, it is preferable to bring the components into contact with each other at a relatively high temperature (e.g., 40 to 130°C). If the reaction temperature is less than 40°C, the reaction may not sufficiently proceed, and the resulting solid catalyst component may exhibit insufficient performance. If the reaction temperature exceeds 130°C, it may be difficult to control the reaction due to significant vaporization of the solvent, for example.

The reaction time after bringing the components into contact with each other is preferably 10 minutes or more, and more preferably 30 minutes or more.

The components may be brought into contact with each other in any of the orders shown below when producing the solid catalyst component.

(1) Magnesium compound (a)→internal electron donor (b)→inert organic solvent→tetravalent-element halogen compound (c)→<<intennediate washing→inert organic solvent→tetravalent-element halogen compound (c)>>→final washing

(2) Magnesium compound (a)→inert organic solvent→internal electron donor (b)→tetravalent-element halogen compound (c)→<<intermediate washing→inert organic solvent→tetravalent-element halogen compound (c)>>→final washing

(3) Magnesium compound (a)→tetravalent-element halogen compound (c)→inert organic solvent→internal electron donor (b)→<<intermediate washing→inert organic solvent→internal electron donor (b)→tetravalent-element halogen compound (c)>>→final washing

(4) Magnesium compound (a)→tetravalent-element halogen compound (c)→inert organic solvent→internal electron donor (b)→<<intermediate washing→inert organic solvent→tetravalent-element halogen compound (c)→internal electron donor (b)>>→final washing

(5) Magnesium compound (a)→tetravalent-element halogen compound (c)→inert organic solvents→internal electron donor (b)→<<intermediate washing→inert organic solvent→internal electron donor (b)→titanium halogen compound (d)>>→final washing

(6) Magnesium compound (a)→inert organic solvent→tetravalent-element halogen compound (c)→internal electron donor (b)→<<intermediate washing→inert organic solvent→titanium halogen compound (d)→internal electron donor (b)>>→final washing

(7) Magnesium compound (a)→inert organic solvent→internal electron donor (b)→tetravalent-element halogen compound (c)→<<intermediate washing→internal electron donor (b)→inert organic solvent→tetravalent-element halogen compound (c)>>→final washing

(8) Magnesium compound (a)→inert organic solvent→internal electron donor (b)→tetravalent-element halogen compound (c)→<<intermediate washing→internal electron donor (b)→inert organic solvent→tetravalent-element halogen compound (c)>>→final washing

Note that the symbol "→" in the contact order examples (1) to (8) indicates the contact order. For example, "magnesium compound (a)→internal electron donor (b)" means that the magnesium compound (a) and the internal electron donor (b) are brought into contact with each other in this order.

The step in the double parentheses (<<>>) in the contact order examples (1) to (8) is a step that is optionally repeated. The catalytic activity is improved by repeating the step in the double parentheses. The tetravalent-element halogen compound (c) or the inert organic solvent used in the step in the double parentheses may be added again, or the residue in the preceding step may be used. When using a titanium halogen compound as the tetravalent-element halogen compound (c), the titanium halogen compound (d) used in the step in the double parentheses may be added again, or the tetravalent-element halogen compound (c) that remains after the preceding step may be used as the titanium halogen compound (d).

It is preferable to perform the washing step (intermediate washing step and final washing step) in the contact order examples (1) to (8) using a hydrocarbon compound that is liquid at room temperature. It is preferable to wash the product obtained in each contact stage in a step other than the intermediate washing step and the final washing step in the contact order examples (1) to (8).

The solid catalyst component may particularly preferably be produced by suspending the magnesium compound (a) (e.g., dialkoxymagnesium) in the inert organic solvent (e.g., toluene, heptane, or cyclohexane), adding the tetravalent-element halogen compound (c) (e.g., titanium tetrachloride) to the suspension (i.e., bringing the tetravalent-element halogen compound (c) into contact with the suspension), and bringing the internal electron donor (b) into contact with the suspension at -20 to 130°C to effect a reaction before or after bringing the tetravalent-element halogen compound (c) into contact with the suspension (e.g., the contact order example (2), (4), or (6)). In this case, it is preferable to effect an aging reaction at a low temperature before or after bringing the internal electron donor (b) into contact with the suspension.

After optionally washing the resulting solid with a hydrocarbon compound that is liquid at room temperature (preliminary washing step), the titanium halogen compound (d) may be brought into contact with the solid in the presence of the hydrocarbon compound at 40 to 130°C to effect a reaction, and the resulting reaction product may be washed with a hydrocarbon compound that is liquid at room temperature (post-washing step) to obtain the target solid catalyst component for olefin polymerization. The preliminary washing step and the reaction between the solid subjected to the preliminary washing step and the tetravalent-element halogen compound (c) or the titanium halogen compound (d) may be repeated a plurality of times.

It is preferable to employ the following reaction conditions and washing conditions.

Low-temperature aging reaction conditions before or after bringing internal electron donor (b) into contact with suspension

The low-temperature aging temperature is preferably -20 to 70°C, more preferably -10 to 50°C, and still more preferably -5 to 30°C. The low-temperature aging time is preferably 1 minute to 6 hours, more preferably 5 minutes to 4 hours, and still more preferably 10 minutes to 3 hours.

Reaction conditions before intermediate washing step

The reaction temperature when reacting the magnesium compound (a), the internal electron donor (b), and the tetravalent-element halogen compound (c) in the inert organic solvent is preferably 0 to 130°C, more preferably 40 to 120°C, and still more preferably 50 to 115°C. The reaction time is preferably 0.5 to 6 hours, more preferably 0.5 to 5 hours, and still more preferably 1 to 4 hours.

Washing conditions for intermediate washing step and final washing step

The washing temperature is preferably 0 to 110°C, more preferably 30 to 100°C, and still more preferably 30 to 90°C. The number of washing operations is preferably 1 to 20, more preferably 1 to 15, and still more preferably 1 to 10.

It is preferable to use an aromatic hydrocarbon compound or a saturated hydrocarbon compound that is liquid at room temperature (20°C) as the hydrocarbon compound (that is liquid at room temperature) used for the intermediate washing step and the final washing step. Specific examples of the aromatic hydrocarbon compound include toluene, xylene, and ethylbenzene. Specific examples of the saturated hydrocarbon compound include hexane, heptane, cyclohexane, and methylcyclohexane. It is preferable to use the aromatic hydrocarbon compound for the intermediate washing step, and use the saturated hydrocarbon compound for the final washing step.

The components are used in an arbitrary ratio depending on the production method when producing the solid catalyst component. For example, the internal electron donor (b) is preferably used in an amount of 0.01 to 10 mol, more preferably 0.01 to 1 mol, and still more preferably 0.02 to 0.6 mol, per mol of the magnesium compound (a), the tetravalent-element halogen compound (c) is preferably used in an amount of 0.5 to 100 mol, more preferably 0.5 to 50 mol, and still more preferably 1 to 10 mol, per mol of the magnesium compound (a), the titanium halogen compound (d) is preferably used in an amount of 0 to 100 mol, more preferably 0.5 to 100 mol, and still more preferably 0.5 to 50 mol, per mol of the magnesium compound (a), and the inert organic solvent is preferably used in an amount of 0.001 to 500 mol, more preferably 0.001 to 100 mol, and still more preferably 0.005 to 10 mol, per mol of the magnesium compound (a).

An olefin polymerization catalyst according to one embodiment of the invention is described below.

The olefin polymerization catalyst according to one embodiment of the invention is produced by bringing ($\alpha$) the solid catalyst component for olefin polymerization (hereinafter may be referred to as "solid catalyst component ($\alpha$)"), ($\beta$) an organoaluminum compound represented by the following general formula (II), and ($\gamma$) an external electron donor into contact with each other.

$$R^2{}_pAlQ_{3-p} \qquad (II)$$

wherein $R^2$ is an alkyl group having 1 to 4 carbon atoms, Q is a hydrogen atom or a halogen atom, and p is a real number that is larger than 0 and equal to or less than 3, provided that a plurality of $R^2$ may be either identical or different when a plurality of $R^2$ are present, and a plurality of Q may be either identical or different when a plurality of Q are present.

The solid catalyst component ($\alpha$) used to produce the olefin polymerization catalyst according to one embodiment of the invention is the same as described above.

The organoaluminum compound ($\beta$) used to produce the olefin polymerization catalyst according to one embodiment of the invention is represented by the following general formula (II).

$$R^2{}_pAlQ_{3-p} \qquad (II)$$

wherein $R^2$ is an alkyl group having 1 to 4 carbon atoms, Q is a hydrogen atom or a halogen atom, and p is a real number that is larger than 0 and equal to or less than 3, provided that a plurality of $R^2$ may be either identical or different when a plurality of $R^2$ are present, and a plurality of Q may be either identical or different when a plurality of Q are present.

$R^2$ in the organoaluminum compound ($\beta$) represented by the general formula (II) is an alkyl group having 1 to 4 carbon atoms. Specific examples of the alkyl group having 1 to 4 carbon atoms include a methyl group, an ethyl group, an n-propyl group, an isopropyl group, an n-butyl group, and an isobutyl group.

Q in the organoaluminum compound ($\beta$) represented by the general formula (II) is a hydrogen atom or a halogen atom. Specific examples of the halogen atom represented by Q include a fluorine atom, a chlorine atom, a bromine atom, and an iodine atom.

Specific examples of the organoaluminum compound ($\beta$) represented by the general formula (II) include one or more compounds selected from triethylaluminum, diethylaluminum chloride, triisobutylaluminum, diethylaluminum bromide, and diethylaluminum hydride. Among these, triethylaluminum and triisobutylaluminum are preferable.

Examples of the external electron donor ($\gamma$) used to produce the olefin polymerization catalyst according to one embodiment of the invention include one or more compounds selected from diisopropyldimethoxysilane and dicyclopentyldimethoxysilane.

The solid catalyst component ($\alpha$), the organoaluminum compound ($\beta$), and the external electron donor ($\gamma$) may be used to produce the olefin polymerization catalyst according to one embodiment of the invention in an arbitrary ratio as long as the advantageous effects of the invention can be achieved. The organoaluminum compound ($\beta$) is preferably used in an amount of 1 to 2000 mol, and more preferably 50 to 1000 mol, per mol of the titanium atoms included in the solid catalyst component ($\alpha$). The external electron donor ($\gamma$) is preferably used in an amount of 0.002 to 10 mol, more preferably 0.01 to 2 mol, and still more preferably 0.01 to 0.5 mol, per mol of the organoaluminum compound ($\beta$).

The olefin polymerization catalyst according to one embodiment of the invention may be produced by bringing the solid catalyst component ($\alpha$), the organoaluminum compound ($\beta$), and the external electron donor ($\gamma$) into contact with each other using a known method. The components may be brought into contact with each other in an arbitrary order. For example, the components may be brought into contact with each other in any of the orders shown below.

(I) Solid catalyst component ($\alpha$)→external electron donor ($\gamma$)→organoaluminum compound ($\beta$)

(II) Organoaluminum compound ($\beta$)→external electron donor ($\gamma$)→solid catalyst component ($\alpha$)

(II) External electron donor ($\gamma$)→solid catalyst component ($\alpha$)→organoaluminum compound ($\beta$)

(IV) External electron donor ($\gamma$)→organoaluminum compound ($\beta$)→solid catalyst component ($\alpha$)

Note that the symbol "→" in the contact order examples (I) to (IV) indicates the contact order. For example, "solid catalyst component ($\alpha$)→external electron donor ($\gamma$)" means that the solid catalyst component ($\alpha$) and the external electron donor ($\gamma$) are brought into contact with each other in this order.

The embodiments of the invention can thus provide an environmentally-friendly olefin polymerization catalyst that exhibits high hydrogen activity and high polymerization activity, can produce a polymer that exhibits a high MFR

and high stereoregularity in high yield using a small amount of hydrogen, and exhibits high copolymerization activity and excellent copolymerization properties (e.g., block ratio).

A method for producing an olefin polymer according to one embodiment of the invention is described below.

The method for producing an olefin polymer according to one embodiment of the invention includes polymerizing an olefin in the presence of the olefin polymerization catalyst according to one embodiment of the invention.

The details of the olefin polymerization catalyst according to one embodiment of the invention have been described above.

The polymerization reaction implemented by the method for producing an olefin polymer according to one embodiment of the invention may be homopolymerization of a specific olefin, or may be copolymerization of a specific olefin and an olefin other than propylene.

Examples of the olefin that is polymerized by the method for producing an olefin polymer according to one embodiment of the invention include ethylene, propylene, 1-butene, 1-pentene, 4-methyl-1-pentene, 3-methyl-1-butene, and vinylcyclohexane. These olefins may be polymerized either alone or in combination. Among these, ethylene, propylene, and 1-butene are preferable, and propylene is particularly preferable.

When the method for producing an olefin polymer according to one embodiment of the invention is used to copolymerize propylene and an olefin other than propylene, the olefin that is copolymerized with propylene may be one or more olefins selected from ethylene, 1-butene, 1-pentene, 4-methyl-1-pentene, and vinylcyclohexane. Among these, ethylene and 1-butene are preferable.

When copolymerizing propylene and an olefin other than propylene, propylene and the olefin other than propylene may be copolymerized in a single stage in the presence of the olefin polymerization catalyst according to one embodiment of the invention (random copolymerization), or propylene may be polymerized in the first stage in the presence of the olefin polymerization catalyst according to one embodiment of the invention, and the resulting polypropylene and the olefin other than propylene may be copolymerized in the second stage (block copolymerization).

For example, propylene and ethylene may be copolymerized in a single stage in the presence of the olefin polymerization catalyst according to one embodiment of the invention (random copolymerization) to produce a propylene-ethylene random copolymer in which the content of structural units derived from ethylene is 0.1 to 7.0 mass%, or propylene may be polymerized in the first stage (first polymerization tank) (homopolymerization stage), and the resulting polypropylene and ethylene may be copolymerized in the second stage (second polymerization tank) to produce a propylene-ethylene block copolymer in which the content of structural units derived from ethylene is 1 to 50 mass%.

Since the method for producing an olefin polymer according to one embodiment of the invention utilizes the olefin polymerization catalyst according to one embodiment of the invention, it is possible to ensure high hydrogen activity and high polymerization activity, produce a polymer that exhibits a high MFR and high stereoregularity in high yield using a small amount of hydrogen, and ensure high copolymerization activity and excellent copolymerization properties (e.g., block ratio).

Polymerization using the olefin polymerization catalyst according to one embodiment of the invention may be effected in the presence or absence of an organic solvent. An olefin monomer (e.g., propylene) subjected to polymerization using the olefin polymerization catalyst according to one embodiment of the invention may be used in a gaseous state or a liquid state. The polymerization temperature is preferably 200°C or less, and more preferably 100°C or less. The polymerization pressure is preferably 10 MPa or less, and more preferably 5 MPa or less. A continuous polymerization method or a batch polymerization method may be employed. The polymerization reaction may be effected in a single stage, or may be effected in two or more stages.

When polymerizing an olefin using the olefin polymerization catalyst according to one embodiment of the invention (hereinafter may be referred to as "main polymerization"), it is preferable to effect preliminary polymerization before the main polymerization in order to improve the catalytic activity, the stereoregularity and the particle properties of the resulting polymer. The olefin subjected to the main polymerization or a monomer such as styrene may be used for the preliminary polymerization. The preliminary polymerization conditions may be the same as the above polymerization conditions.

More specifically, the solid catalyst component ($\alpha$), the organoaluminum compound ($\beta$), and the external electron donor ($\gamma$) (optional) are brought into contact with each other in the presence of an olefin to preliminarily polymerize a polymer in an amount of 0.1 to 100 g per gram of the solid catalyst component ($\alpha$), and the organoaluminum compound ($\beta$) and the external electron donor ($\gamma$) are optionally brought into contact with the mixture.

The components and the monomer may be brought into contact with each other in an arbitrary order when effecting the preliminary polymerization. For example, the organoaluminum compound ($\beta$) is added to a preliminary polymerization system that contains an inert gas atmosphere or an olefin gas atmosphere. The solid catalyst component ($\alpha$) is then added to the preliminary polymerization system (i.e., the solid catalyst component ($\alpha$) is brought into contact with the organoaluminum compound ($\beta$)), and an olefin (e.g., propylene) and/or one or more other olefins are brought into contact with the mixture.

Alternatively, the organoaluminum compound ($\beta$) is added to a preliminary polymerization system that contains an inert gas atmosphere or an olefin gas atmosphere, and the external electron donor ($\gamma$) is added to the preliminary polymerization system (i.e., the external electron donor ($\gamma$) is brought into contact with the organoaluminum compound ($\beta$)). The solid catalyst component ($\alpha$) is then added to the preliminary polymerization system (i.e., the solid catalyst component ($\alpha$) is brought into contact with the mixture), and an olefin (e.g., propylene) and/or one or more other olefins are brought into contact with the mixture.

The embodiments of the invention can thus provide a method for producing an olefin polymer that ensures high hydrogen activity and high polymerization activity, and can produce a polymer that exhibits a high MFR and high stereoregularity in high yield using a small amount of hydrogen by polymerizing an olefin in the presence of the olefin polymerization catalyst produced by bringing the solid catalyst component ($\alpha$), the organoaluminum compound ($\beta$), and the external electron donor ($\gamma$) into contact with each other.

EXAMPLES

The invention is further described below by way of examples and comparative examples. Note that the invention is not limited to the following examples.

Example 1 as reference (not according to the invention)

(1) Production of solid catalyst component

A 500 ml round-bottom flask equipped with a stirrer, of which the internal atmosphere had been sufficiently replaced with nitrogen gas, was charged with 10 g of diethoxymagnesium and 80 ml of toluene to prepare a suspension. After the addition of 20 ml of titanium tetrachloride to the suspension, the mixture was heated. 3.10 ml of dimethyl diisobutylmalonate was added to the mixture when the temperature of the mixture had reached 80°C, and the mixture was heated to 110°C. The mixture was reacted for 1 hour with stirring while maintaining the temperature of the mixture at 110°C. The mixture was then washed three times with 100 ml of toluene (90°C). After the addition of 20 ml of titanium tetrachloride and 80 ml of toluene, the mixture was heated to 110°C, and reacted for 1 hour with stirring. The mixture was then washed seven times with 100 ml of n-heptane (40°C) to obtain a solid catalyst component. The titanium content in the solid catalyst component was measured after subjecting the solid catalyst component to solid-liquid separation, and found to be 3.6 mass%.

(2) Production of polymerization catalyst

An autoclave (internal volume: 2.01) equipped with a stirrer, of which the internal atmosphere had been completely replaced with nitrogen gas, was charged with 1.32 mmol of triethylaluminum, 0.13 mmol of cyclohexylmethyldimethoxysilane, and the solid catalyst component obtained in (1) (0.0026 mmol based on the amount of titanium atoms) to obtain a polymerization catalyst.

(3) Polymerization of liquefied propylene

An autoclave equipped with a stirrer and charged with the polymerization catalyst was charged with 2.0 1 of hydrogen gas and 1.4 1 of liquefied propylene. The liquefied propylene was subjected to preliminary polymerization at 20°C for 5 minutes, heated, and polymerized at 70°C for 1 hour to obtain a polymer (polypropylene).

Table 1 shows the polymerization activity per gram of the solid catalyst component, the xylene-soluble content (XS) in the polymer, and the MFR of the polymer.

The polymerization activity per gram of the solid catalyst component, the xylene-soluble content (XS) in the polymer, and the MFR of the polymer were measured as described below.

Polymerization activity per gram of solid catalyst component (g-PP/(g-cat·h)) (Mass (g) of polymer / mass (g) of solid catalyst component) / 1 (h)

Xylene-soluble content (XS) (mass%) in polymer

Measurement of xylene-soluble component: A flask equipped with a stirrer was charged with 4.0 g of the polymer and 200 ml of p-xylene. The external temperature was increased to be equal to or higher than the boiling point (about 150°C) of xylene, and the polymer was dissolved over 2 hours while maintaining p-xylene contained in the flask at a temperature (137 to 138°C) lower than the boiling point. The solution was then cooled to 23°C, and an insoluble component and a soluble component were separated by filtration. A solution of the soluble component was collected, and p-xylene was evaporated by heating and drying under reduced pressure. The mass of the residue (xylene-soluble component) was calculated as a value (mass%) relative to the mass of the polymer (polypropylene), and taken as the xylene-soluble content (XS).

Melt flow rate (MFR) of polymer

The melt flow rate (MFR) (melt flow index) of the polymer was measured in accordance with ASTM D 1238 (JIS K 7210).

Example 2

A solid catalyst component was produced in the same manner as in Example 1, except that 0.13 mmol of dicyclopentyldimethoxysilane was used instead of 0.13 mmol of cyclohexylmethyldimethoxysilane. A polymerization catalyst was produced in the same manner as in Example 1, except that the resulting solid catalyst component was used, and polymerization was effected in the same manner as in Example 1, except that the resulting polymerization catalyst was used.
The polymerization activity per gram of the solid catalyst component, the xylene-soluble content (XS) in the polymer, and the MFR of the polymer were measured in the same manner as in Example 1. The results are shown in Table 1.

Example 3

A solid catalyst component was produced in the same manner as in Example 1, except that 0.13 mmol of diisopropyldimethoxysilane was used instead of 0.13 mmol of cyclohexylmethyldimethoxysilane. A polymerization catalyst was produced in the same manner as in Example 1, except that the resulting solid catalyst component was used, and polymerization was effected in the same manner as in Example 1, except that the resulting polymerization catalyst was used.
The polymerization activity per gram of the solid catalyst component, the xylene-soluble content (XS) in the polymer, and the MFR of the polymer were measured in the same manner as in Example 1. The results are shown in Table 1.

Example 4

(1) Production of solid catalyst component

A 500 ml round-bottom flask equipped with a stirrer, of which the internal atmosphere had been sufficiently replaced with nitrogen gas, was charged with 20 g of diethoxymagnesium, 100 ml of toluene, and 3.00 ml of dimethyl diisobutylmalonate to prepare a suspension. The suspension was added over 1 hour to a 500 ml round-bottom flask equipped with a stirrer that had been charged with a mixture of 40 ml of titanium tetrachloride and 60 ml of toluene. The mixture was cooled to -10°C, and held for 1 hour. Next, the mixture was heated from -10°C to 100°C over 100 minutes, and 3.50 ml of dimethyl diisobutylmalonate was added to the mixture when the temperature of the mixture had reached 90°C. The mixture was heated to 112°C, and reacted for 2 hours with stirring.
After completion of the reaction, the resulting solid product was washed four times with 200 ml of toluene (90°C). After the addition of 60 ml of titanium tetrachloride and 140 ml of toluene, the mixture was heated to 112°C, and reacted for 2 hours with stirring. After completion of the reaction, the mixture was washed ten times with 200 ml of n-heptane (40°C) to obtain a solid catalyst component. The titanium content in the solid catalyst component was measured after subjecting the solid catalyst component to solid-liquid separation, and found to be 3.1 mass%.

(2) Production of polymerization catalyst

An autoclave (internal volume: 2.01) equipped with a stirrer, of which the internal atmosphere had been completely replaced with nitrogen gas, was charged with 2.4 mmol of triethylaluminum, 0.24 mmol of dicyclopentyldimethoxysilane, and the solid catalyst component obtained in (1) (0.003 mmol based on the amount of titanium atoms) to obtain a polymerization catalyst.

(3) Polymerization

(i) An autoclave equipped with a stirrer and charged with the polymerization catalyst was charged with liquefied propylene (15 mol) and hydrogen gas (partial pressure: 0.20 MPa). The liquefied propylene was subjected to preliminary polymerization at 20°C for 5 minutes, heated, and subjected to first-stage polymerization (homopolymerization stage) at 70°C for 75 minutes to obtain homopolypropylene (homo-PP). After completion of first-stage polymerization, unreacted monomers were discharged from the autoclave, and the pressure inside the autoclave was returned to normal pressure.

After replacing the atmosphere inside the autoclave with nitrogen, the mass of the autoclave was measured. The tare mass of the autoclave was subtracted from the measured mass to calculate to the amount of homo-PP produced, and the polymerization activity per gram of the solid catalyst component was measured in the same manner as in Example 1. The xylene-soluble content (XS) in the polymer and the MFR of the polymer were also measured in the same manner as in Example 1.

(ii) The mixture containing homo-PP and the polymerization catalyst was stirred and heated, and ethylene gas and propylene gas were added to the autoclave so that the partial pressure ratio was 1:1. Next, second-stage polymerization (copolymerization) was effected at 70°C for 1 hour while continuously supplying propylene gas, ethylene gas, and hydrogen gas to the autoclave in a gas supply rate ratio (ethylene gas/propylene gas/hydrogen gas) of 2.0/2.0/0.086 NL/min (molar ratio: 1.0/1.0/0.043) so that the total pressure was 1.2 MPa.

After completion of polymerization, the supply of the propylene gas, ethylene gas, and hydrogen gas was stopped, unreacted monomers were discharged from the autoclave, and the pressure inside the autoclave was returned to normal pressure. After replacing the atmosphere inside the autoclave with nitrogen, the mass of the autoclave was measured, and the mass of the copolymer produced was measured. Table 2 shows the measurement results for the catalytic polymerization activity, the MFR, the stereoregularity, the copolymerization activity, and the block ratio when producing homo-PP.

Note that the catalytic polymerization activity when producing homo-PP, the stereoregularity (xylene-soluble content (XS) (mass%)) of homo-PP, the MFR of homo-PP, the ethylene-propylene block copolymerization activity when producing the ethylene-propylene block copolymer, and the block ratio of the resulting copolymer were measured as described below.

Catalytic polymerization activity when producing homo-PP

The catalytic polymerization activity (homopolymerization-stage polymerization activity) when producing homo-PP was calculated using the following expression. Catalytic polymerization activity (g-PP/(g-cat·h)) when producing homo-PP = (mass (g) of homo-PP produced / mass (g) of solid catalyst component) / 1.25 (h)

The mass (g) of homo-PP produced was calculated by subtracting the mass (g) of the autoclave from the mass (g) of the autoclave after unreacted monomers had been removed after completion of polymerization of homo-PP.

In Table 2, the item "first-stage (homopolymerization-stage) polymerization activity" indicates the calculated catalytic polymerization activity.

Stereoregularity (xylene-soluble content (XS) (mass%)) of homo-PP

The stereoregularity (xylene-soluble content (XS) (mass%)) of homo-PP was measured in the same manner as in Example 1, except that homo-PP removed from the autoclave was used as the measurement sample.

MFR of homo-PP

The MFR of homo-PP was measured in accordance with ASTM D 1238.

Ethylene-propylene block copolymerization activity when producing ethylene-propylene block copolymer, and block ratio of resulting copolymer

The ethylene-propylene block copolymerization activity when producing the ethylene-propylene block copolymer, and the block ratio of the resulting copolymer were calculated using the following expressions.

$$\text{Copolymerization activity (g-ICP/(g-cat·h))} = ((I\ (g) - G\ (g))\ /\ \text{mass (g) of solid catalyst component})\ /\ 1.0\ (h)$$

$$\text{Block ratio (mass\%)} = \{(I\ (g) - G\ (g)) / (I\ (g) - F\ (g))\} \times 100$$

Note that I is the mass (g) of the autoclave after completion of copolymerization, G is the mass (g) of the autoclave after unreacted monomers had been removed after completion of polymerization of homo-PP, and F is the mass (g) of the autoclave.

Comparative Example 1

A solid catalyst component was produced in the same manner as in Example 1, except that 3.90 ml of diethyl diisobutylmalonate was used instead of 3.12 ml of dimethyl diisobutylmalonate. A polymerization catalyst was produced in the same manner as in Example 1, except that the resulting solid catalyst component was used, and polymerization was effected in the same manner as in Example 1, except that the resulting polymerization catalyst was used. The titanium content in the solid catalyst component was 4.1 mass%.

The polymerization activity per gram of the solid catalyst component, the xylene-soluble content (XS) in the polymer, and the MFR of the polymer were measured in the same manner as in Example 1. The results are shown in Table 1.

Comparative Example 2

A solid catalyst component was produced in the same manner as in Example 1, except that 2.60 ml of dimethyl methylisobutylmalonate was used instead of 3.12 ml of dimethyl diisobutylmalonate. A polymerization catalyst was produced in the same manner as in Example 1, except that the resulting solid catalyst component was used, and polymerization was effected in the same manner as in Example 1, except that the resulting polymerization catalyst was used. The titanium content in the solid catalyst component was 3.2 mass%.

The polymerization activity per gram of the solid catalyst component, the xylene-soluble content (XS) in the polymer, and the MFR of the polymer were measured in the same manner as in Example 1. The results are shown in Table 1.

Comparative Example 3

A solid catalyst component was produced in the same manner as in Example 1, except that 3.12 ml of dimethyl n-butylisobutylmalonate was used instead of 3.12 ml of dimethyl diisobutylmalonate. A polymerization catalyst was produced in the same manner as in Example 1, except that the resulting solid catalyst component was used, and polymerization was effected in the same manner as in Example 1, except that the resulting polymerization catalyst was used. The titanium content in the solid catalyst component was 3.2 mass%.

The polymerization activity per gram of the solid catalyst component, the xylene-soluble content (XS) in the polymer, and the MFR of the polymer were measured in the same manner as in Example 1. The results are shown in Table 1.

Comparative Example 4

A solid catalyst component was produced in the same manner as in Example 4, except that 2.60 ml of dimethyl methylisobutylmalonate was used instead of 3.12 ml of dimethyl diisobutylmalonate. A polymerization catalyst was produced in the same manner as in Example 4, except that the resulting solid catalyst component was used, and polymerization was effected in the same manner as in Example 4, except that the resulting polymerization catalyst was used. The titanium content in the solid catalyst component was 3.0 mass%.

The catalytic polymerization activity (homopolymerization-stage polymerization activity) when producing homo-PP, the stereoregularity (xylene-soluble content (XS) (mass%)) of homo-PP, the MFR of homo-PP, the ethylene-propylene block copolymerization activity when producing the ethylene-propylene block copolymer, and the block ratio of the resulting copolymer were measured in the same manner as in Example 4. The results are shown in Table 2.

TABLE 1

|  | Polymerization activity (g-PP/(g-cat·h)) | XS (mass%) | MFR (g/10 min) |
| --- | --- | --- | --- |
| Reference Example 1 | 45,200 | 2.5 | 80 |
| Example 2 | 53,200 | 1.7 | 30 |

(continued)

|  | Polymerization activity (g-PP/(g-cat·h)) | XS (mass%) | MFR (g/10 min) |
|---|---|---|---|
| Example 3 | 51,500 | 1.9 | 50 |
| Comparative Example 1 | 56,900 | 3.0 | 16 |
| Comparative Example 2 | 39,700 | 3.5 | 25 |
| Comparative Example 3 | 37,200 | 3.1 | 34 |

TABLE 2

|  | First-stage (homopolymerization-stage) polymerization activity (g-PP/(g-cat·h)) | XS (mass%) | MFR (g/10 min) | Copolymerization activity (g-ICP/(g-cat·h)) | Block ratio (mass%) |
|---|---|---|---|---|---|
| Example 4 | 51,600 | 1.4 | 60 | 16,000 | 24 |
| Comparative Example 4 | 42,100 | 2.5 | 28 | 10,100 | 19 |

As is clear from the results shown in Table 1, it was confirmed that the polymerization catalysts respectively containing the solid catalyst components obtained in Examples 2 and 3 exhibited high hydrogen activity and high polymerization activity, could produce a polymer exhibiting a high MFR and high stereoregularity in high yield using a small amount of hydrogen, and were environmentally-friendly.

As is clear from the results shown in Table 2, it was confirmed that the polymerization catalyst containing the solid catalyst component obtained in Example 4 could produce an ethylene-propylene block copolymer (ICP) exhibiting high stereoregularity and a high MFR while ensuring excellent copolymerization activity and excellent copolymerization properties.

In contrast, when using the polymerization catalysts respectively containing the solid catalyst components obtained in Comparative Examples 1 to 3, a decrease in MFR occurred due to low hydrogen activity (Comparative Examples 1 to 3) and/or a decrease in stereoregularity and polymerization activity occurred (Comparative Examples 2 and 3). When using the polymerization catalyst containing the solid catalyst component obtained in Comparative Example 4, stereoregularity, an MFR, copolymerization activity, a block ratio, and the like required for the ethylene-propylene block copolymer (ICP) deteriorated.

The embodiments of the invention thus provide an environmentally-friendly olefin polymerization catalyst that exhibit high hydrogen activity and high polymerization activity, can produce a polymer that exhibits a high MFR and high stereoregularity in high yield using a small amount of hydrogen, and exhibit high copolymerization activity and excellent copolymerization properties (e.g., block ratio), and also provide a method for producing an olefin polymer that utilizes the olefin polymerization catalyst.

**Claims**

1.   An olefin polymerization catalyst produced by bringing (α) a solid catalyst component for olefin polymerization, (β) an organoaluminum compound represented by a general formula (II), and (γ) an external electron donor into contact with each other,

$$R^2{}_pAlQ_{3-p} \qquad (II)$$

wherein $R^2$ is an alkyl group having 1 to 4 carbon atoms, Q is a hydrogen atom or a halogen atom, and p is a real number that is larger than 0 and equal to or less than 3, provided that a plurality of $R^2$ may be either identical or different when a plurality of $R^2$ are present, and a plurality of Q may be either identical or different when a plurality of Q are present,

the solid catalyst component (α) being produced by bringing (a) a magnesium compound, (b) an internal electron donor represented by a general formula (I),

and (c) a tetravalent-element halogen compound into contact with each other in an inert organic solvent,

$$R^1_2C(COOCH_3)_2 \qquad (I)$$

wherein $R^1$ is selected from an isobutyl group, and
the external electron donor ($\gamma$) being one or more compounds selected from diisopropyldimethoxysilane and dicyclopentyldimethoxysilane.

2. The olefin polymerization catalyst according to claim 1, wherein the magnesium compound (a) is a dialkoxymagnesium.

3. The olefin polymerization catalyst according to claim 1 or 2, wherein the tetravalent-element halogen compound (c) is titanium tetrachloride.

4. A method for producing an olefin polymer comprising polymerizing an olefin in the presence of the olefin polymerization catalyst according to any one of claims 1 to 3.

5. The method for producing an olefin polymer according to claim 4, wherein the olefin polymer is a copolymer of propylene and an olefin other than propylene.

6. The method for producing an olefin polymer according to claim 5, wherein the olefin is propylene and ethylene, and subjected to random copolymerization in a single stage or subjected to block copolymerization wherein propylene is po-lymerized in a first stage in the presence of the olefin polymerization catalyst according to any one of claims 1 to 3, and the resulting polypropylen and ethylene are polymerized in the second stage.

**Patentansprüche**

1. Olefinpolymerisationskatalysator, hergestellt durch das miteinander Inkontaktbringen ($\alpha$) einer festen Katalysatorkomponente für die Olefinpolymerisation, ($\beta$) einer Organoaluminiumverbindung, dargestellt durch eine allgemeine Formel (II), und ($\gamma$) eines externen Elektronendonors,

$$R^2_p AlQ_{3-p} \qquad (II)$$

wobei $R^2$ eine Alkylgruppe mit 1 bis 4 Kohlenstoffatomen ist, Q ein Wasserstoffatom oder ein Halogenatom ist, und p eine reale Zahl ist, die größer als 0 und gleich oder weniger als 3 ist, mit der Maßgabe, dass eine Mehrzahl an $R^2$ entweder identisch oder verschieden sein können, falls eine Mehrzahl an $R^2$ vorhanden sind, und eine Mehrzahl an Q entweder identisch oder verschieden sein können, falls eine Mehrzahl an Q vorhanden sind, wobei die feste Katalysatorkomponente ($\alpha$) durch das miteinander Inkontaktbringen (a) einer Magnesiumverbindung, (b) eines internen Elektronendonors, dargestellt durch eine allgemeine Formel (I), und (c) einer vierwertigen Halogenelementverbindung in einem inerten organischen Lösungsmittel hergestellt ist,

$$R^1_2C(COOCH_3)_2 \qquad (I)$$

wobei $R^1$ aus einer Isobutylgruppe ausgewählt ist, und
der externe Elektronendonor ($\gamma$) eine oder mehrere Verbindungen ist, ausgewählt aus Diisopropyldimethoxysilan und Dicyclopentyldimethoxysilan.

2. Olefinpolymerisationskatalysator nach Anspruch 1, wobei die Magnesium-verbindung (a) ein Dialkoxymagnesium ist.

3. Olefinpolymerisationskatalysator nach Anspruch 1 oder 2, wobei die vierwertige Halogenelementverbindung (c) Titantetrachlorid ist.

4. Verfahren zur Herstellung eines Olefinpolymers, umfassend das Polymerisieren eines Olefins in der Gegenwart des Olefinpolymerisationskatalysators nach einem der Ansprüche 1 bis 3.

5. Verfahren zur Herstellung eines Olefinpolymers nach Anspruch 4, wobei das Olefinpolymer ein Copolymer aus Propylen und einem von Propylen verschiedenen Olefin ist.

**6.** Verfahren zur Herstellung eines Olefinpolymers nach Anspruch 5, wobei das Olefin Propylen und Ethylen ist und einer statistischen Copolymerisation in einer einzigen Stufe unterworfen wird oder einer Blockcopolymerisation unterworfen wird, wobei Propylen in einer ersten Stufe in der Gegenwart des Olefinpolymerisationskatalysators nach einem der Ansprüche 1 bis 3 polymerisiert wird, und das resultierende Polypropylen und Ethylen in der zweiten Stufe polymerisiert werden.


**Revendications**

**1.** Catalyseur de polymérisation d'oléfine produit par mise en contact les uns avec les autres de ($\alpha$) un composant de catalyseur solide pour la polymérisation des oléfines, ($\beta$) un composé organoaluminium représenté par la formule générale (II), et ($\gamma$) un donneur d'électrons externe,

$$R^2{}_p AlQ_{3-p} \qquad (II)$$

où $R^2$ est un groupe alkyle ayant 1 à 4 atomes de carbone, Q est un atome d'hydrogène ou un atome d'halogène, et p est un nombre réel supérieur à 0 et égal ou inférieur à 3, pourvu que les différents $R^2$ peuvent être identiques ou différents lorsque plus d'un $R^2$ est présent, et que les différents Q peuvent être identiques ou différents lorsque plus d'un Q est présent,

le composant de catalyseur solide ($\alpha$) étant produit par mise en contact les uns avec les autres dans un solvant organique inerte, de (a) un composé du magnésium, (b) un donneur d'électrons interne représenté par la formule générale (I), et (c) un composé halogéné d'un élément tétravalent,

$$R^1{}_2 C(COOCH_3)_2 \qquad (I)$$

où $R^1$ est choisi parmi le groupe isobutyle, et
le donneur d'électrons externe ($\gamma$) étant un ou plusieurs composés choisis parmi le diisopropyldiméthoxysilane et le dicyclopentyldiméthoxysilane.

**2.** Catalyseur de polymérisation d'oléfine selon la revendication 1, où le composé du magnésium (a) est un dialcoxymagnésium.

**3.** Catalyseur de polymérisation d'oléfine selon la revendication 1 ou 2, où le composé halogéné d'un élément tétravalent (c) est le tétrachlorure de titane.

**4.** Procédé de production d'un polymère oléfinique comprenant la polymérisation d'une oléfine en présence du catalyseur de polymérisation d'oléfine selon l'une quelconque des revendications 1 à 3.

**5.** Procédé de production d'un polymère oléfinique selon la revendication 4, où le polymère oléfinique est un copolymère de propylène et d'une oléfine autre que le propylène.

**6.** Procédé de production d'un polymère oléfinique selon la revendication 5, où l'oléfine est le propylène et l'éthylène, soumises à une copolymérisation aléatoire en une seule étape ou soumises à une copolymérisation séquencée où le propylène est polymérisé dans une première étape en présence du catalyseur de polymérisation d'oléfine selon l'une quelconque des revendications 1 à 3, et le polypropylène résultant et l'éthylène sont polymérisés dans une deuxième étape.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63003010 A
- JP 2004091513 A
- WO 2008120795 A
- JP 2010242062 A
- JP 58041832 A
- JP 62051633 A
- JP 3074341 A
- JP 4368391 A
- JP 8073388 A